# EUROPEAN PATENT SPECIFICATION

(11) **EP 3 163 885 B1**
(45) Date of publication and mention of the grant of the patent: **15.03.2023**
(21) Application number: 16169651.3
(22) Date of filing: 13.05.2016
(51) Int. Cl.: H04N 21/41, G08C 17/02, G06F 1/16, H04N 21/422, H04W 52/02, H04W 4/00

(54) **METHOD AND APPARATUS FOR CONTROLLING ELECTRONIC DEVICE**
VERFAHREN UND VORRICHTUNG ZUR STEUERUNG EINER ELEKTRONISCHEN VORRICHTUNG
PROCÉDÉ ET APPAREIL DE CONTRÔLE D'UN DISPOSITIF ÉLECTRONIQUE

(30) Priority: 29.10.2015 CN 201510719315
(43) Date of publication of application: 03.05.2017
(73) Proprietor: Xiaomi Inc., Beijing 100085 (CN)
(72) Inventor: ZHANG, Yanlu, Beijing 100085 (CN); MENG, Deguo, Beijing 100085 (CN); HOU, Enxing, Beijing 100085 (CN)
(74) Representative: Cabinet Beau de Loménie

(56) References cited:
- EP-A1- 2 355 563
- CN-A- 104 575 539
- US-A1- 2014 270 306
- US-A1- 2014 355 389

## Description

### TECHNICAL FIELD

The present invention generally relates to the field of smart home, and more particularly, to a method and apparatus for controlling an electronic device.

### BACKGROUND

At present, most of electronic devices (such as smart home device) may be controlled by remote controllers, and in order to facilitate use by a user, multiple electronic devices in a same spatial environment may be controlled by one remote controller.

When one remote controller may control multiple electronic devices, for avoiding influence of control over one electronic device on another electronic device, the remote controller is required to be bound with a device to be controlled at first, then the device can be controlled, and when electronic device is required to be controlled, it is necessary to unbind the currently bound device. In a related technology, a process of binding a remote controller and electronic device is relatively complex, a user is usually required to simultaneously operate the remote controller and the electronic device, and even assistance of third-party device is required sometimes, so that an operating experience of the user is seriously influenced.

US20140355389A1 discloses a method, apparatus and computer program product are provided to provide for the control of a remote device. The method may include determining, with a processor, a control radius for a remote device, determining a first proximity of a user device to the remote device, in response to determining that the first proximity is within the control radius, enabling the user device to control the remote device, determining at least one command input from the user device to the remote device based on a second proximity of the user device to the remote device, and causing transmission of the command input to the remote device.

US20140270306A1 discloses mobile device speaker control. The mobile device speaker control may include: monitoring one or more devices wirelessly coupled with a data network, receiving one or more data packets from each of the one or more devices, filtering received data packets by evaluating a received signal strength (e.g., RSSI) of the received packets, comparing the received signal strength of each of the received packets to a threshold to determine whether the one or more devices are to perform an action, and performing the action only if one or more indicia other than the received signal strength indicate a near field proximity within the threshold or a direct physical contact between a wireless device receiving the data packets and one of the one or more devices that is wirelessly transmitting the data packets.

CN104575539A discloses a music playing control method and a device. The music playing control method comprises the following steps of detecting bluetooth signal strength of players included in a music playing system, sorting the players according to the signal strength from large to small, and carrying out playing control on the music playing system according to a sorting result. With the adoption of the method and device, the players nearby a user can be identified, and the user is not required to manually identify which players are located around, so that the user can select the specific players to play music or automatically group the players to play the music.

### SUMMARY

Accordingly, the invention provides a method and apparatus for controlling an electronic device, in accordance with claims which follow.

The invention is defined by a method for controlling an electronic device according to claim 1, an apparatus for controlling an electronic device according to claim 8, a computer program according to claim 9 and a recording medium according to claim 10.

According to a first aspect of embodiments of the present invention, there is provided a method for controlling an electronic device, wherein:
a strength of a signal from a control device is detected;
a control instruction sent by the control device is acquired in response to a determination that the strength of the signal is higher than a preset strength; and
processing is performed according to the control instruction,
wherein the method further includes:
   signal strengths between other devices and the control device are acquired;
   wherein the step wherein a control instruction sent by the control device is acquired in response to a determination that the strength of the signal is higher than a preset strength may include:
      signal strengths between respective devices and the control device are compared in response to the determination that the strength of the signal is higher than the preset strength; and
      the control instruction sent by the control device is acquired in response to a determination that the strength of the signal from the control device is the maximum one among the compared signal strengths (i.e., it is the highest signal among the signal strengths of all devices).

In the embodiment of the invention, by means of the steps that the strength of the signal from the control device is detected, the control instruction sent by the control device is acquired in response to the determination that the strength of the signal is higher than the preset strength and processing is performed according to the control instruction, the strength of the signal from the control device is determined as one of conditions of processing the control instruction sent by the control device, and when the signal strength between the execution device and the control device is higher than a certain value, that is, the execution device is close enough to the control device, the instruction of the control device may be executed, and a user may selectively control a certain execution device only by mastering a distance between the control device and the execution device, thereby simplifying user operations and improving user experiences.

According to an exemplary embodiment, the step wherein a control instruction sent by the control device is acquired in response to a determination that the strength of the signal is higher than a preset strength may include:
a current arrangement of the control device is acquired in response to the determination that the strength of the signal is higher than the preset strength, the current arrangement including an orientation of the control device; and
the control instruction sent by the control device is acquired in response to a determination that the orientation of the control device falls within a preset control area.

According to an exemplary embodiment, the step wherein a control instruction sent by the control device is acquired in response to a determination that the strength of the signal is higher than a preset strength may include:
current environmental information is acquired in response to the determination that the strength of the signal is higher than the preset strength; and
the control instruction sent by the control device is acquired in response to a determination that an environment indicated by the current environmental information is different from a preset environment.

According to an exemplary embodiment, the step wherein processing is performed according to the control instruction may include:
binding or unbinding with the control device is performed according to the control instruction.

According to an exemplary embodiment, the method may further include:
attribute information of the control device is acquired;
a strength corresponding to the attribute information is determined as the preset strength;
wherein the attribute information may include at least one of a device identifier and a transmission power, the transmission power being positive correlative with the preset strength.

According to an exemplary embodiment, the step wherein a strength of a signal from a control device is detected may include:
a Received Signal Strength Indication (RSSI) of the signal from the control device is acquired; and
the strength of the signal is acquired according to the RSSI.

According to an exemplary embodiment, the strength of the signal may include a strength of a Bluetooth signal.

According to a second aspect of embodiments of the present invention, there is provided an apparatus for controlling an electronic device, including:
a strength detection module, configured to detect a strength of a signal from a control device;
an instruction acquisition module, configured to acquire a control instruction sent by the control device in response to a determination that the strength of the signal detected by the strength detection module is higher than a preset strength; and
a processing module, configured to perform processing according to the control instruction acquired by the instruction acquisition module,
wherein the apparatus further includes:
   a strength acquisition module, configured to acquire signal strengths between other devices and the control device; and
   the instruction acquisition module may include:
      a comparison sub-module, configured to compare signal strengths between respective devices and the control device in response to the determination that the strength of the signal detected by the strength detection module is higher than the preset strength; and
      a first instruction acquisition sub-module, configured to acquire the control instruction sent by the control device in response to a determination that the strength of the signal from the control device is the maximum one among the compared signal strengths.

The advantages and technical effects of the device according to the invention correspond to those of the method presented above.

According to a particular embodiment, the instruction acquisition module may include:
an arrangement acquisition sub-module, configured to acquire a current arrangement of the control device in response to the determination that the strength of the signal detected by the strength detection module is higher than the preset strength, the current arrangement including an orientation of the control device; and
a second instruction acquisition sub-module, configured to acquire the control instruction sent by the control device in response to a determination that the orientation of the control device falls within a preset control area.

According to a particular embodiment, the instruction acquisition module may include:
an environmental information acquisition sub-module, configured to acquire current environmental information in response to the determination that the strength of the signal detected by the strength detection module is higher than the preset strength; and
a third instruction acquisition sub-module, configured to acquire the control instruction sent by the control device in response to a determination that an environment indicated by the environmental information acquired by the environmental information acquisition sub-module is different from a preset environment.

According to a particular embodiment, the processing module may be configured to bind or unbind with the control device according to the control instruction.

According to a particular embodiment, the apparatus may further include:
an attribute acquisition module, configured to acquire attribute information of the control device;
a strength determination module, configured to determine a strength corresponding to the attribute information acquired by the attribute acquisition module as the preset strength;
wherein the attribute information comprises at least one of a device identifier and a transmission power, the transmission power being positive correlative with the preset strength.

According to a particular embodiment, the strength detection module may include:
an indication information acquisition sub-module, configured to acquire an RSSI of the signal from the control device; and
a signal strength acquisition sub-module, configured to acquire the strength of the signal according to the RSSI acquired by the indication information acquisition sub-module.

According to a particular embodiment, the strength of the signal may include a strength of a Bluetooth signal.

According to a third aspect of embodiments of the present invention, there is provided an apparatus for controlling an electronic device, including:
a processor; and
a memory for storing instructions executable by the processor,
wherein the processor may be configured to execute the steps of a method for controlling an electronic device as described above.

In one particular embodiment, the steps of the method for controlling an electronic device are determined by computer program instructions.

Consequently, according to a fourth aspect, the invention is also directed to a computer program for executing the steps of a method for controlling an electronic device as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
Fig. 1 is a schematic diagram illustrating an implementation environment involved in a method for controlling an electronic device according to the present invention.
Fig. 2 is a flow chart showing a method for controlling an electronic device according to an exemplary embodiment.
Fig. 3A is a flow chart showing a method for controlling an electronic device according to another exemplary embodiment.
Fig. 3B is a flow chart showing a method for acquiring a control instruction according to an embodiment shown in Fig. 3A.
Fig. 3C is a flow chart showing another method for acquiring a control instruction according to an embodiment shown in Fig. 3A.
Fig. 3D is a flow chart showing yet another method for acquiring a control instruction according to an embodiment shown in Fig. 3A.
Fig. 4 is a flow chart showing a method for controlling an electronic device according to another exemplary embodiment.
Fig. 5 is a block diagram of an apparatus for controlling an electronic device according to an exemplary embodiment.
Fig. 6 is a block diagram of an apparatus for controlling an electronic device according to another exemplary embodiment.
Fig. 7 is a block diagram of an apparatus according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of apparatuses and methods consistent with aspects related to the present invention as recited in the appended claims.

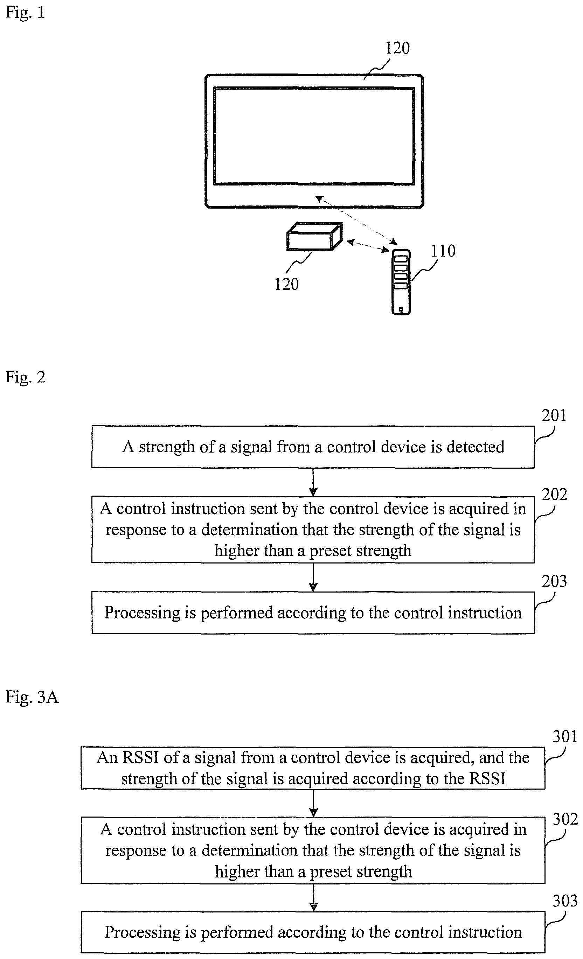

Fig. 1 is a schematic diagram illustrating an implementation environment involved in a method for controlling an electronic device according to the present invention. The implementation environment may include: a control device 110 and an execution device 120.

The control device 110 may be a specialized device, such as a remote controller, for controlling another electronic device through a wireless signal; or, the control device 110 may also be a smart device with a control function, such as a smart phone, a tablet computer, an electronic book reader, smart wearable device (a smart watch and a smart band) or the like.

The execution device 120 may receive a control instruction sent by the control device through a wireless signal and perform corresponding processing according to the control instruction.

In a possible scenario, the control device 110 may be a remote controller, and the execution device 120 may be various types of smart household appliances such as a smart television, a set-top box, an air conditioner and a purifier.

Fig. 2 is a flow chart showing a method for controlling an electronic device according to an exemplary embodiment. The method provided by the embodiment may be executed by an execution device 120 in an implementation environment shown in Fig. 1. The method for controlling an electronic device may include the following steps.

In step 201, a strength of a signal from a control device is detected.

In step 202, a control instruction sent by the control device is acquired in response to a determination that the strength of the signal is higher than a preset strength.

In step 203, processing is performed according to the control instruction.

From the above, according to the method for controlling an electronic device provided by embodiments of the invention, by means of the steps that the strength of the signal from the control device is detected, the control instruction sent by the control device is acquired in response to the determination that the strength of the signal is higher than the preset strength and processing is performed according to the control instruction, the strength of the signal from the control device is determined as one of conditions of processing the control instruction sent by the control device, and when the signal strength between the execution device and the control device is higher than a certain value, that is, the execution device is close enough to the control device, the instruction of the control device may be executed, and a user may selectively control a certain execution device only by mastering a distance between the control device and the execution device, thereby simplifying user operations and improving user experiences.

Fig. 3A is a flow chart showing a method for controlling an electronic device according to another exemplary embodiment. The method provided by the embodiment may be executed by the execution device 120 in an implementation environment shown in Fig. 1. The method for controlling an electronic device may include the following steps.

In step 301, an RSSI of a signal from a control device is acquired, and the strength of the signal is acquired according to the RSSI.

In the embodiment of the present invention, the signal strength between the execution device and the control device may be acquired through an RSSI value of a wireless signal sent by the control device.

The execution device may perform instruction interaction with the control device, and correspondingly, the signal strength is BT (BlueTooth) signal strength. The control device establishes a BT connection with the execution device before sending a control instruction to the execution device through a BT signal.

Optionally, the execution device may interact with the control device through another type of wireless signal, such as a Wireless Local Area Network (WLAN) signal.

In step 302, a control instruction sent by the control device is acquired in response to a determination that the strength of the signal is higher than a preset strength.

When signal transmission power of the control device is unchanged, signal strength of the wireless signal, received by the execution device, of the control device is higher if the control device is closer to the execution device, and on the contrary, the signal strength of the wireless signal, received by the execution device, of the control device is lower. Only when the signal strength of the wireless signal sent from the control device and received by the execution device is high enough, that is, the control device is close enough to the execution device, the execution device may process the instruction sent by the control device. A user may move the control device to get close to the execution device and send the control instruction to control the execution device.

Optionally, in the embodiment of the present invention, in order to improve accuracy in user operation and avoid misoperation of the user, whether to trigger processing of the control instruction or not may also be determined in combination with other related conditions than on the basis of the condition that the signal strength is higher than the preset signal.

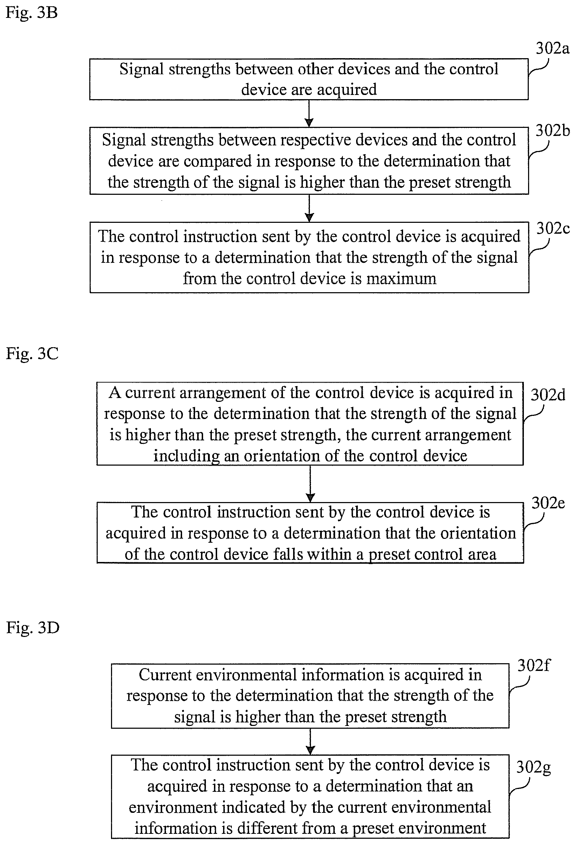

Fig. 3B is a flow chart showing a method for acquiring a control instruction according to an embodiment shown in Fig. 3A. In an implementation mode of the present invention, referring to Fig. 3B, the method may include Step 302a to Step 302c.

In step 302a, signal strengths between other devices and the control device are acquired.

In step 302b, signal strengths between respective devices and the control device are compared in response to the determination that the strength of the signal is higher than the preset strength.

In step 302c, the control instruction sent by the control device is acquired in response to a determination that the strength of the signal from the control device is maximum.

In the embodiment of the present invention, the control device may be simultaneously bound with multiple execution devices, and when two execution devices are close and both may receive the wireless signal sent by the control device (for example, the wireless signal sent by the control device is a WLAN signal) and the signal strength of the received wireless signal is high enough, the two execution devices may respond to the control instruction in the wireless signal, and the user usually wants to control only one device, so that misoperation may be generated. In order to avoid the abovementioned situation, in the embodiment of the present invention, when the execution device receives the wireless signal sent from the control device, besides detecting whether the signal strength of the wireless signal is high enough , the execution device may also acquire a signal strength of the signal sent from the control device and received by each of other devices, the signal strength being sent by each of the other devices which receives the signal sent from the control device, and determine whether the signal strength of the signal received by the execution device is higher than the signal strength of the signals received by all of the other device or not. If YES, it indicates that the control device is the closest to the execution device, and the execution device may acquire the control instruction in the wireless signal and perform subsequent processing.

Fig. 3C is a flow chart showing another method for acquiring a control instruction according to an embodiment shown in Fig. 3A. In another implementation mode of the present invention, referring to Fig. 3C, the method may include Step 302d and Step 302e.

In step 302d, a current arrangement of the control device is acquired in response to the determination that the strength of the signal is higher than the preset strength, the current arrangement including an orientation of the control device. For example, the control device is positioned vertically or horizontally, and the orientation of the control device that is acquired comprises an angle of the control device in three-dimensional space control.

In step 302e, the control instruction sent by the control device is acquired in response to a determination that the orientation of the control device falls within a preset control area. For example, if the control device is a TV remote control device, such a determination may consist in determining that the control device is currently pointing to the TV.

In the embodiment of the present invention, the arrangement of the control device, in addition to the signal strength, may also be used for making a response to the control instruction sent by the control device. For example, an arrangement sensor is arranged in the control device, the arrangement of the control device is acquired in real time, and the control device also include the current arrangement n the wireless signal when sending the wireless signal including the control instruction. When the execution device detects that the signal strength of the wireless signal received from the control device is higher than the preset strength and the orientation of the control device is determined to fall within the preset control area according to the arrangement of the control device, it may be determined that destination device of the wireless signal sent by the control device is the execution device, and then the execution device may acquire the control instruction in the wireless signal and perform subsequent processing.

Fig. 3D is a flow chart showing another method for acquiring a control instruction according to an embodiment shown in Fig. 3A. In another implementation mode of the present invention, referring to Fig. 3D, the method may include Step 302f and Step 302g.

In step 302f, current environmental information is acquired in response to the determination that the strength of the signal is higher than the preset strength.

In step 302g, the control instruction sent by the control device is acquired in response to a determination that an environment indicated by the current environmental information is different from a preset environment.

During a practical application, a partial use of the execution device may be related to a climatic environment. For example, an electric fan is usually used only in summer, an air conditioner is usually used only in summer and winter, and an electric heater and a bath heater are usually used only in winter. When the user operates the controlled device through the control device in seasons when the execution device is not used under a normal condition, it may probably be misoperation of the user. Therefore, in the embodiment of the present invention, when the execution device receives the wireless signal sent by the control device, the execution device is also required to detect whether the current environment (such as season) is the same as the preset environment (such as a season when the execution device is not used under the normal condition) or not, in addition to detecting whether the signal strength of the wireless signal is high enough or not, and may acquire the control instruction in the wireless signal and perform subsequent processing if the current environment is different from the preset environment.

Optionally, when it is detected that the signal strength of the wireless signal is high enough and the current environment (such as season) is the same as the preset environment, the execution device may also give a prompt, such as an acoustic-optic prompt or a voice prompt, to prompt the user that the execution device is not required to be used for the environment where the user is currently located.

In another implementation mode of the present invention, the execution device may also acquire a time length during which the wireless signal is continuously received in response to the determination that the signal strength is higher than the preset strength. The control instruction sent by the control device is acquired if the time length for which the wireless signal is continuously received is greater than a predetermined time length.

In a practical application process, the user may mistakenly touch a certain control key in the control device, and then an event of mistakenly operating the execution device may occur if the control device is excessively close to the execution device. Since a process of mistakenly touching a certain control key by the user is usually short, a time limit may be set for validation of the control instruction to reduce a possibility of misoperation after determining that the signal strength is higher than the preset strength in the embodiment of the present invention, and only when the control device is close enough to the execution device and the user presses the control key for a certain period of time at the same time, the execution device may acquire the control instruction sent by the control device.

Optionally, each response condition involved in the abovementioned implementation modes may be independently used, and part or all of the response conditions may be combined for use. For example, only when the signal strength of the wireless signal is higher than the preset strength, the time length during which the wireless signal is continuously received exceeds a preset time length, the environment where the execution device is currently located is different from the preset environment and the signal strength of the wireless signal received by the execution device is a maximum value compared with the signal strength of the wireless signal received by each of the other devices, the execution device may acquire the control instruction sent by the control device.

In step 303, processing is performed according to the control instruction.

Optionally, in a particular implementation mode, performing according to the control instruction may include performing binding or unbinding with the control device according to the control instruction. By the abovementioned method, the user may implement a step of binding and unbinding the device only by moving the control device close to the execution device and pressing down a specific key to have the execution device been bound or unbound with the control device, so that the operation step of binding or unbinding the device is simplified.

Optionally, the method of the embodiment of the present invention may not be limited to binding and unbinding, and may also be configured for ordinary control over device to be controlled, such as startup, shutdown and other control.

The condition that the control device is a remote controller and the execution device is a set-top box is taken as an example. The user may establish a BT connection between the remote controller and the set-top box at first, move the remote controller close to the set-top box and press down a binding/unbinding key when wanting to bind/unbind the remote controller and the set-top box. Then the remote controller sends a BT signal including a binding/unbinding instruction to the set-top box, and the set-top box receives the BT signal sent by the remote controller, detects that an RSSI value of the BT signal is higher than a preset threshold value, is bound with the remote controller, and may directly execute corresponding processing when subsequently receiving a wireless signal containing a non-unbinding instruction from the remote controller. Optionally, for avoiding misoperation, the set-top box of the user may also detect a time period or length (duration) during which the BT signal including the binding signal is continuously received, and is bound with the remote controller when the time period or length during which the BT signal is continuously received exceeds 2s.

In addition, in the abovementioned example, the remote controller may also be connected with multiple controllable devices including the set-top box in a WLAN manner. For example, the remote controller may simultaneously establish WLAN connections with the set-top box and a smart television, a WLAN signal sent by the remote controller may be simultaneously received by the set-top box and the smart television, the set-top box is closer to the smart television under a normal condition, an RSSI value of the WLAN signal, received by the smart television, of the remote controller may also be higher than the preset threshold value when the user moves the remote controller close to the set-top box, and then, if the user wants to bind/unbind the set-top box and the remote controller, the smart television may also be bound with the remote controller when the remote controller sends the WLAN signal including a binding/unbinding instruction. In order to avoid such a condition, the set-top box and the smart television may send the RSSI values of own received WLAN signals, the set-top box detects that the RSSI value of the WLAN signal received by the set-top box is higher than the RSSI value of the WLAN signal received by the smart television, and is bound with the remote controller. The smart television detects that the RSSI value of the WLAN signal received by the smart television is lower than the RSSI value of the WLAN signal received by the set-top box, and does not perform binding operation.

The condition that the control device is the remote controller and the execution device is the set-top box is taken as an example again. During another practical application, an arrangement sensor is also arranged in the remote controller, and is configured to detect the arrangement of the remote controller in real time, and when a binding/unbinding command is sent to the set-top box through a wireless signal such as a BT signal or a WLAN signal, real-time arrangement information is contained in the wireless signal. After receiving the wireless signal and confirming that the strength of the wireless signal is higher than the preset strength, the set-top box may also determine whether an orientation of the remote controller falls within a preset control area or not according to a receiving angle of the wireless signal and a current arrangement of the remote controller, and if YES, performs binding/unbinding operation. That is, the user is also required to enable the remote controller to point to the preset control area, except moving the remote controller close to the set-top box, when wanting to control the set-top box.

During another practical application, the remote controller establishes a WLAN connection with the set-top box, the control device is the remote controller, and the execution device is a smart air conditioner. The user establishes a wireless (BT or WLAN) connection between the remote controller and the set-top box at first, moves the remote controller close to the smart air conditioner and presses down the binding/unbinding key when wanting to bind/unbind the remote controller and the set-top box, then the remote controller sends a wireless signal including a binding/unbinding instruction to the smart air conditioner, and the smart air conditioner further detects whether a current season is a season (spring or autumn) when the smart air conditioner is not used or not after receiving the signal sent by the remote controller and detecting that an RSSI value of the signal is higher than a preset threshold value, is bound with the remote controller if the current season is spring or autumn, and if the current season is not spring or autumn, is temporarily not bound with the remote controller and simultaneously prompts the user that the current season is not the season when the smart air conditioner is used and whether to confirm binding/unbinding or not, and is bound with the remote controller if the user presses down the binding/unbinding key in the remote controller again.

From the above, according to the method for controlling an electronic device provided by embodiments of the invention, by means of the steps that the strength of the signal from the control device is detected, the control instruction sent by the control device is acquired in response to the determination that the strength of the signal is higher than the preset strength and processing is performed according to the control instruction, the strength of the signal from the control device is determined as one of conditions of processing the control instruction sent by the control device, and when the signal strength between the execution device and the control device is higher than a certain value, that is, the execution device is close enough to the control device, the instruction of the control device may be executed, and a user may selectively control a certain execution device only by mastering a distance between the control device and the execution device, thereby simplifying user operations and improving user experiences.

In addition, according to the method provided by the embodiment of the present invention, whether to process the control instruction or not may also be determined in combination with the other conditions, such as whether the time length for which the wireless signal is continuously received exceeds the preset time length or not, whether the signal strength of the wireless signal received by the execution device is the maximum value in the signal strength of the wireless signal received by each device or not, whether the orientation of the control device falls within the preset control area or not and whether the environment where the execution device is currently located is matched with a service environment of the execution device or not, so that the possibility of misoperation of the user is reduced, and control performance is improved.

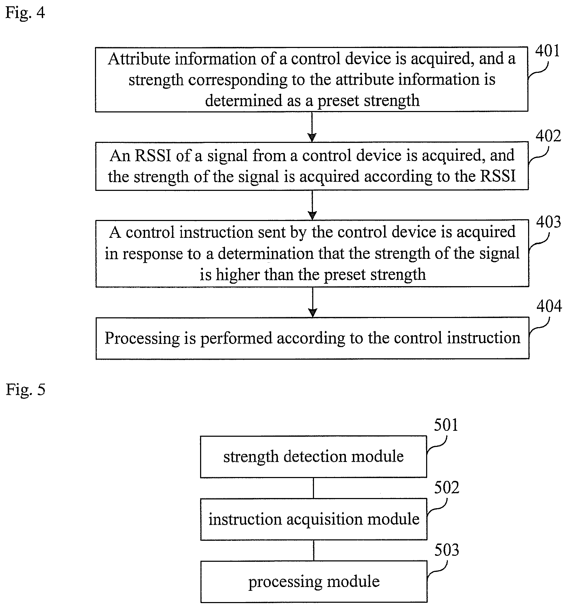

Fig. 4 is a flow chart showing a method for controlling an electronic device according to another exemplary embodiment. The method provided by the embodiment of the present invention may be implemented by the execution device 120 in an implementation environment shown in Fig. 1. The method for controlling an electronic device may include the following steps.

In step 401, attribute information of a control device is acquired, and a strength corresponding to the attribute information is determined as a preset strength.

The attribute information includes at least one of a device identifier and a transmission power, the transmission power forming positive correlation with the preset strength (i.e. the transmission power and the preset strength have values that vary in the same direction: when the transmission power is increased, the preset strength is increased and when the transmission power is decreased, the preset strength is decreased).

The attribute information of the control device may be contained in a wireless signal including a control instruction, and may also be independently sent to the execution device distinctively from the control instruction.

Different control device may have different wireless signal transmission powers, a user may have multiple control devices, and if the execution device determines whether to acquire the control instruction or not by virtue of the same preset strength, when the signal transmission power of a certain control device is lower, the user is required to move the control device closer to the execution device, and on the contrary, when the signal transmission power of a certain control device is higher, the user may operate at a longer distance. In order to unify control distances of different control devices, the execution device may determine the preset strength according to the attribute information of the control device in the wireless signal, for example, the device identifier or the transmission power of the control device. For example, the execution device may query the wireless signal transmission power of the control device according to the device identifier of the control device and determine the preset strength according to the transmission power, or, the execution device may also directly read the transmission power in the wireless signal and determine the preset strength according to the transmission power.

For example, the execution device is a set-top box and the control device is a remote controller, and an expected distance between the set-top box and the remote controller is 5cm when the set-top box accepts binding/unbinding operation of the remote controller. Strength corresponding to different transmission power may be preset in the set-top box, and for example, the strength corresponding to the transmission power may be signal strength of the wireless signal sent with the transmission power at a position which is 5cm far away from a signal source. It can be understood that attenuation curves of signal strength of two wireless signals with the same or similar frequencies are also similar when transmission distances are the same, that is, signal strength of a signal sent with higher transmission power is higher after being transmitted by the same distance. The set-top box may extract the transmission power of the wireless signal in the wireless signal when receiving the wireless signal sent by the remote controller, query the pre-stored strength corresponding to the transmission power and determine the queried strength as the preset strength. Optionally, the set-top box may also not store the strength corresponding to different transmission power, and calculates the preset strength according to the transmission power and the expected distance after acquiring the transmission power of the wireless signal.

In step 402, an RSSI of a signal from a control device is acquired, and the strength of the signal is acquired according to the RSSI.

In step 403, a control instruction sent by the control device is acquired in response to a determination that the strength of the signal is higher than the preset strength.

In step 404, processing is performed according to the control instruction.

An implementation process from Step 402 to Step 404 may refer to description about Step 301 to Step 303 in the embodiment corresponding to Fig. 3A, and will not be repeated here.

From the above, according to the method for controlling an electronic device provided by embodiments of the invention, by means of the steps that the strength of the signal from the control device is detected, the control instruction sent by the control device is acquired in response to the determination that the strength of the signal is higher than the preset strength and processing is performed according to the control instruction, the strength of the signal from the control device is determined as one of conditions of processing the control instruction sent by the control device, and when the signal strength between the execution device and the control device is higher than a certain value, that is, the execution device is close enough to the control device, the instruction of the control device may be executed, and a user may selectively control a certain execution device only by mastering a distance between the control device and the execution device, thereby simplifying user operations and improving user experiences.

In addition, according to the method provided by the embodiment of the present invention, whether to process the control instruction or not may also be determined in combination with the other conditions, such as whether a time length or period during which the wireless signal is continuously received exceeds a preset time length or not, whether the signal strength of the wireless signal received by the execution device is the maximum value in the signal strength of the wireless signal received by each device or not, whether an orientation of the control device falls within a preset control area or not and whether an environment where the execution device is currently located is matched with a service environment of the execution device or not, so that a possibility of misoperation of the user is reduced, and control performance is improved.

In addition, according to the method provided by the embodiment of the present invention, the preset strength is determined according to the device identifier or transmission power of the control device, and the control distances of different control device are unified, so that an operation experience of the user is further improved.

Apparatus embodiments of the present invention are described below, and may be configured to execute the method embodiments of the present invention. Details undisclosed in the apparatus embodiments of the present invention refer to the method embodiments of the present invention.

Fig. 5 is a block diagram of an apparatus for controlling an electronic device according to an exemplary embodiment. The apparatus for controlling an electronic device may be implemented into a part or all of the execution device 120 in the implementation environment shown in Fig. 1 by virtue of software, hardware or a combination of the two, and is configured to execute the method for controlling an electronic device shown in any one of Fig. 2, Fig. 3A and Fig. 4. The apparatus for controlling an electronic device may include: a strength detection module 501, an instruction acquisition module 502 and a processing module 503, wherein
the strength detection module 501 is configured to detect signal strength between execution device and control device;
the instruction acquisition module 502 is configured to acquire a control instruction sent by the control device in response to determination that the signal strength detected by the strength detection module 501 is higher than preset strength; and
the processing module 503 is configured to perform processing according to the control instruction acquired by the instruction acquisition module 502.

From the above, according to the apparatus for controlling an electronic device provided by embodiments of the invention, by means of the steps that the strength of the signal from the control device is detected, the control instruction sent by the control device is acquired in response to the determination that the strength of the signal is higher than the preset strength and processing is performed according to the control instruction, the strength of the signal from the control device is determined as one of conditions of processing the control instruction sent by the control device, and when the signal strength between the execution device and the control device is higher than a certain value, that is, the execution device is close enough to the control device, the instruction of the control device may be executed, and a user may selectively control a certain execution device only by mastering a distance between the control device and the execution device, thereby simplifying user operations and improving user experiences.

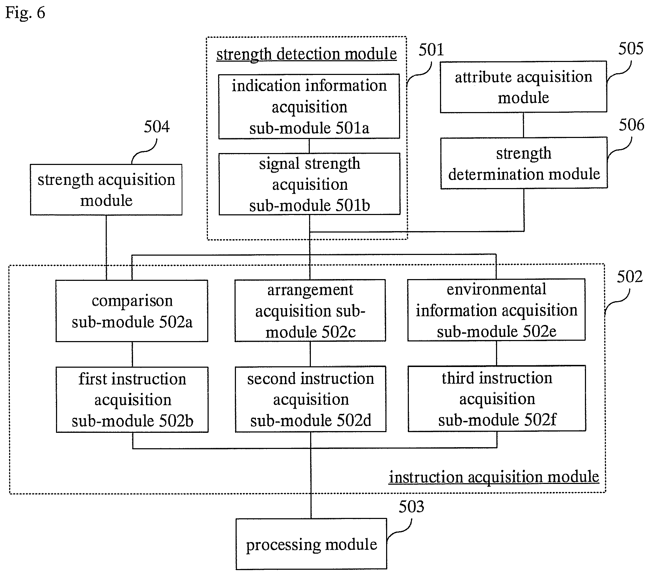

Fig. 6 is a block diagram of an apparatus for controlling an electronic device according to another exemplary embodiment. The apparatus for controlling an electronic device may be implemented into a part or all of the execution device 120 in the implementation environment shown in Fig. 1 by virtue of software, hardware or a combination of the two, and is configured to execute the method for controlling an electronic device shown in any one of Fig. 2, Fig. 3A and Fig. 4. The apparatus for controlling an electronic device may include: a strength detection module 501, an instruction acquisition module 502 and a processing module 503, wherein
the strength detection module 501 is configured to detect signal strength between execution device and control device;
the instruction acquisition module 502 is configured to acquire a control instruction sent by the control device in response to determination that the signal strength detected by the strength detection module 501 is higher than preset strength; and
the processing module 503 is configured to perform processing according to the control instruction acquired by the instruction acquisition module 502.

Optionally, the apparatus for controlling an electronic device further includes: a strength acquisition module 504;
the strength acquisition module 504 is configured to acquire signal strength between other device and the control device;
the instruction acquisition module 502 includes: a comparison sub-module 502a and a first instruction acquisition sub-module 502b;
the comparison sub-module 502a is configured to compare the signal strength between each device and the control device in response to the determination that the signal strength detected by the strength detection module 501 is higher than the preset strength; and
the first instruction acquisition sub-module 502b is configured to acquire the control instruction sent by the control device in response to determination that the signal strength between the execution device and the control device is maximum.

Optionally, the instruction acquisition module 502 includes: an arrangement acquisition sub-module 502c and a second instruction acquisition sub-module 502d;
the arrangement acquisition sub-module 502c is configured to acquire a current arrangement of the control device in response to the determination that the signal strength detected by the strength detection module 501 is higher than the preset strength, the current arrangement including an orientation of the control device; and
the second instruction acquisition sub-module 502d is configured to acquire the control instruction sent by the control device in response to determination that the orientation of the control device falls within a preset control area.

Optionally, the instruction acquisition module 502 includes: an environmental information acquisition sub-module 502e and a third instruction acquisition sub-module 502f;
the environmental information acquisition sub-module 502e is configured to acquire current environmental information in response to the determination that the signal strength detected by the strength detection module 501 is higher than the preset strength; and
the third instruction acquisition sub-module 502f is configured to acquire the control instruction sent by the control device in response to determination that an environment indicated by the environmental information acquired by the environmental information acquisition sub-module 502e is different from a preset environment.

Optionally, the processing module 503 is configured to perform binding or unbinding with the control device according to the control instruction.

Optionally, the apparatus further includes: an attribute acquisition module 505 and a strength determination module 506;
the attribute acquisition module 505 is configured to acquire attribute information of the control device;
the strength determination module 506 is configured to determine strength corresponding to the attribute information acquired by the attribute acquisition module 505 as the preset strength; and
the attribute information includes at least one of the following two: a device identifier and transmission power, the transmission power forming positive correlation with the preset strength.

Optionally, the strength detection module 501 includes: an indication information acquisition sub-module 501a and a signal strength acquisition sub-module 501b;
the indication information acquisition sub-module 501a is configured to acquire an RSSI between the execution device and the control device; and
the signal strength acquisition sub-module 501b is configured to acquire the signal strength according to the RSSI acquired by the indication information acquisition sub-module.

Optionally, the signal strength may include: BT signal strength.

From the above, according to the apparatus for controlling an electronic device provided by the embodiment of the present invention, by means of the steps that the strength of the signal from the control device is detected, the control instruction sent by the control device is acquired in response to the determination that the strength of the signal is higher than the preset strength and processing is performed according to the control instruction, the strength of the signal from the control device is determined as one of conditions of processing the control instruction sent by the control device, and when the signal strength between the execution device and the control device is higher than a certain value, that is, the execution device is close enough to the control device, the instruction of the control device may be executed, and a user may selectively control a certain execution device only by mastering a distance between the control device and the execution device, thereby simplifying user operations and improving user experiences.

In addition, according to the apparatus provided by the embodiment of the present invention, whether to process the control instruction or not may also be determined in combination with other conditions, such as whether a time length or period during which for which a wireless signal is continuously received exceeds a preset time period (or time length) or not, whether signal strength of the wireless signal received by the execution device is a maximum value in the signal strength of the wireless signal received by each device or not, whether the orientation of the control device falls within the preset control area or not and whether the environment where the execution device is currently located is matched with a service environment of the execution device or not, so that a possibility of misoperation of the user is reduced, and control performance is improved.

In addition, according to the apparatus provided by the embodiment of the present invention, the preset strength is determined according to the device identifier or transmission power of the control device, and control distances of different control device are unified, so that the operation experience of the user is further improved.

It is to be noted that description is made only with division of each abovementioned functional module as an example when the apparatus provided by the embodiment controls electronic device, and during a practical application, the abovementioned functions may be allocated to different functional modules for realization according to a practical requirement, that is, a content structure of the device is divided into different functional modules to realize a part or all of the abovementioned functions.

With respect to the apparatuses in the above embodiments, the specific manners for performing operations for individual modules therein have been described in detail in the embodiments regarding the related methods, which will not be elaborated herein.

An exemplary embodiment of the present invention further provides an apparatus for controlling an electronic device, which may implement the method for controlling an electronic device provided by the present invention. The apparatus includes: a processor, and a memory configured to store an executable instruction of the processor. Wherein, the process is configured to:
detect signal strength between execution device and control device;
acquire a control instruction sent by the control device in response to determination that the signal strength is higher than preset strength; and
perform processing according to the control instruction.

Optionally, the processor is further configured to:
acquire signal strength between other device and the control device;
acquiring the control instruction sent by the control device in response to the determination that the signal strength is higher than the preset strength includes:
   comparing the signal strength between each device and the control device in response to the determination that the signal strength is higher than the preset strength; and
   acquiring the control instruction sent by the control device in response to determination that the signal strength between the execution device and the control device is maximum.

Optionally, acquiring the control instruction sent by the control device in response to the determination that the signal strength is higher than the preset strength includes:
acquiring a current arrangement of the control device in response to the determination that the signal strength is higher than the preset strength, the current arrangement including an orientation of the control device; and
acquiring the control instruction sent by the control device in response to determination that the orientation of the control device falls within a preset control area.

Optionally, acquiring the control instruction sent by the control device in response to the determination that the signal strength is higher than the preset strength includes:
acquiring current environmental information in response to the determination that the signal strength is higher than the preset strength; and
acquiring the control instruction sent by the control device in response to determination that an environment indicated by the environmental information is different from a preset environment.

Optionally, performing processing according to the control instruction includes:
performing binding or unbinding with the control device according to the control instruction.

Optionally, the process is further configured to:
acquire attribute information of the control device;
determine strength corresponding to the attribute information as the preset strength; and
the attribute information includes at least one of a device identifier and a transmission power, the transmission power forming positive correlation with the preset strength.

Optionally, detecting the signal strength between the execution device and the control device includes:
acquiring an RSSI between the execution device and the control device; and
acquiring the signal strength according to the RSSI.

Optionally, the signal strength includes: BT signal strength.

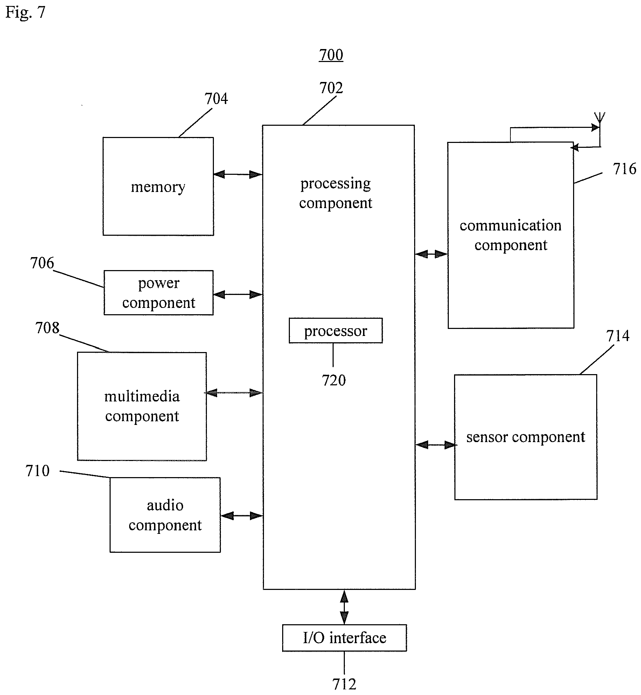

Fig. 7 is a block diagram of an apparatus 700 configured to control electronic device according to an exemplary embodiment. For example, the apparatus 700 may be a mobile phone, a computer, a digital broadcast terminal, a messaging apparatus, a gaming console, a tablet, a medical apparatus, exercise device, a personal digital assistant, smart home device and the like.

Referring to Fig. 7, the apparatus 700 may include one or more of the following components: a processing component 702, a memory 704, a power component 706, a multimedia component 708, an audio component 710, an Input/Output (I/O) interface 712, a sensor component 714, and a communication component 716.

The processing component 702 typically controls overall operations of the apparatus 700, such as the operations associated with display, telephone calls, data communications, camera operations, and recording operations. The processing component 702 may include one or more processors 720 to execute instructions to perform all or part of the steps in the abovementioned methods. Moreover, the processing component 702 may include one or more modules which facilitate interaction between the processing component 702 and the other components. For instance, the processing component 702 may include a multimedia module to facilitate interaction between the multimedia component 708 and the processing component 702.

The memory 704 is configured to store various types of data to support the operation of the apparatus 700. Examples of such data include instructions for any applications or methods operated on the apparatus 700, contact data, phonebook data, messages, pictures, video, etc. The memory 704 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 706 provides power for various components of the apparatus 700. The power component 706 may include a power management system, one or more power supplies, and other components associated with the generation, management and distribution of power for the apparatus 700.

The multimedia component 708 includes a screen providing an output interface between the apparatus 700 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 708 includes a front camera and/or a rear camera. The front camera and/or the rear camera may receive external multimedia data when the apparatus 700 is in an operation mode, such as a photographing mode or a video mode. Each of the front camera and the rear camera may be a fixed optical lens system or have focusing and optical zooming capabilities.

The audio component 710 is configured to output and/or input an audio signal. For example, the audio component 710 includes a microphone (MIC), and the MIC is configured to receive an external audio signal when the apparatus 700 is in the operation mode, such as a call mode, a recording mode and a voice recognition mode. The received audio signal may be further stored in the memory 704 or sent through the communication component 716. In some embodiments, the audio component 710 further includes a speaker configured to output the audio signal.

The I/O interface 712 provides an interface between the processing component 702 and a peripheral interface module, and the peripheral interface module may be a keyboard, a click wheel, a button and the like. The button may include, but not limited to: a home button, a volume button, a starting button and a locking button.

The sensor component 714 includes one or more sensors configured to provide status assessment in various aspects for the apparatus 700. For instance, the sensor component 714 may detect an on/off status of the apparatus 700 and relative positioning of components, such as a display and small keyboard of the apparatus 700, and the sensor component 714 may further detect a change in a position of the apparatus 700 or a component of the apparatus 700, presence or absence of contact between the user and the apparatus 700, orientation or acceleration/deceleration of the apparatus 700 and a change in temperature of the apparatus 700. The sensor component 714 may include a proximity sensor configured to detect presence of an object nearby without any physical contact. The sensor component 714 may also include a light sensor, such as a Complementary Metal Oxide Semiconductor (CMOS) or Charge Coupled Apparatus (CCD) image sensor, configured for use in an imaging application. In some embodiments, the sensor component 714 may also include an acceleration sensor, a gyroscope sensor, a magnetic sensor, a pressure sensor or a temperature sensor.

The communication component 716 is configured to facilitate wired or wireless communication between the apparatus 700 and another apparatus. The apparatus 700 may access a communication-standard-based wireless network, such as a Wireless Fidelity (WiFi) network, a 2nd-Generation (2G) or 3rd-Generation (3G) network or a combination thereof. In an exemplary embodiment, the communication component 716 receives a broadcast signal or broadcast associated information from an external broadcast management system through a broadcast channel. In an exemplary embodiment, the communication component 716 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BT technology and another technology.

In the exemplary embodiment, the apparatus 700 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned methods.

In the exemplary embodiment, there is also provided a non-transitory computer-readable storage medium including an instruction, such as the memory 704 including an instruction, and the instruction may be executed by the processor 720 of the apparatus 700 to implement the abovementioned methods. For example, the non-transitory computer-readable storage medium may be a ROM, a Radom Access Memory (RAM), a Compact Disc Read-Only Memory (CD-ROM), a magnetic tape, a floppy disc, an optical data storage apparatus and the like.

According to the non-transitory computer-readable storage medium, when the instruction in the storage medium is executed by the processor of the apparatus 700, the apparatus 700 may execute the method for controlling an electronic device shown in any one of Fig. 2, Fig. 3A and Fig. 4.

Other embodiments of the present invention will be apparent to those skilled in the art from consideration of the specification and practice of the present invention disclosed here. This application is intended to cover any variations, uses, or adaptations of the present invention following the general principles thereof and including such departures from the present invention as come within known or customary practice in the art. It is intended that the specification and examples be considered as exemplary only, the scope of the present invention being indicated by the following claims.

It will be appreciated that the present invention is not limited to the exact construction that has been described above and illustrated in the accompanying drawings, and that various modifications and changes may be made without departing from the scope thereof. It is intended that the scope of the present invention only be limited by the appended claims.

### INDUSTRIAL APPLICABILITY

In the technical solutions provided by embodiments of the invention, by means of the steps that the strength of the signal from the control device is detected, the control instruction sent by the control device is acquired in response to the determination that the strength of the signal is higher than the preset strength and processing is performed according to the control instruction, the strength of the signal from the control device is determined as one of conditions of processing the control instruction sent by the control device, and when the signal strength between the execution device and the control device is higher than a certain value, that is, the execution device is close enough to the control device, the instruction of the control device may be executed, and a user may selectively control a certain execution device only by mastering a distance between the control device and the execution device, thereby simplifying user operations and improving user experiences.

## Claims

1. A method for controlling an electronic device, performed by an execution device, comprising:
detecting (201) a first strength of a wireless signal transmitted from a control device;
receiving second strengths of the wireless signal, the second strengths being sent from each of other execution devices receiving the wireless signal transmitted from the control device;
comparing the first strength and the second strengths in response to a first determination that the first strength is higher than a preset strength;
acquiring (202) a control instruction in the wireless signal in response to a second determination that the first strength is higher than each of the second strengths; and
performing (203) processing according to the control instruction after the control instruction is acquired, wherein whether to process the control instruction is determined according to whether a time length for which said wireless signal is continuously received exceeds a preset time length.

2. The method according to claim 1, further comprising:
acquiring (302d) a current arrangement of the control device in response to the first determination that the first strength of the wireless signal is higher than the preset strength, the current arrangement comprising an orientation of the control device, wherein:
whether to process the control instruction comprises determining that the orientation of the control device falls within a preset control area.

3. The method according to claim 1, further comprising:
acquiring (302f) current environmental information, wherein:
whether to process the control instruction comprises determining that an environment indicated by the current environmental information is different from a preset environment.

4. The method according to any one of claims 1-3, wherein performing processing according to the control instruction comprises:
binding or unbinding with the control device according to the control instruction.

5. The method according to any one of claims 1-3, further comprising:
acquiring attribute information of the control device;
determining a strength corresponding to the attribute information as the preset strength;
wherein the attribute information comprises at least one of a device identifier and a transmission power, the transmission power being positive correlative with the preset strength.

6. The method according to any of claims 1-3, wherein detecting the first strength of the wireless signal from the control device comprises:
acquiring a Received Signal Strength Indication, RSSI, of the wireless signal from the control device; and
acquiring the first strength of the wireless signal according to the RSSI.

7. The method according to any one of claims 1-3, wherein the first strength of the wireless signal comprises: a strength of a Bluetooth signal.

8. An apparatus for controlling an electronic device, comprising:
a processor; and
a memory for storing instructions executable by the processor,
the apparatus being **characterized in that** the processor is configured to execute the steps of a method for controlling an electronic device according to any one of claims 1 to 7.

9. A computer program including instructions for executing the steps of a method for controlling an electronic device according to any one of claims 1 to 7 when said program is executed by a computer.

10. A recording medium readable by a computer and having recorded thereon a computer program including instructions for executing the steps of a method for controlling an electronic device according to any one of claims 1 to 7.

## Patentansprüche

1. Verfahren zum Steuern einer elektronischen Vorrichtung, das von einer Ausführungsvorrichtung durchgeführt wird und Folgendes umfasst:
Detektieren (201) einer ersten Stärke eines drahtlosen Signals, das von einer Steuervorrichtung übertragen wird;
Empfangen von zweiten Stärken des drahtlosen Signals, wobei die zweiten Stärken von jeder von anderen Ausführungsvorrichtungen gesendet werden, die das drahtlose Signal empfangen, das von der Steuervorrichtung übertragen wird;
Vergleichen der ersten Stärke und der zweiten Stärken in Reaktion auf eine erste Bestimmung, dass die erste Stärke größer ist als eine voreingestellte Stärke;
Erfassen (202) einer Steueranweisung im drahtlosen Signal in Reaktion auf eine zweite Bestimmung, dass die erste Stärke größer ist als jede der zweiten Stärken; und
Durchführen (203) einer Verarbeitung gemäß der Steueranweisung, nachdem die Steueranweisung erfasst wurde, wobei, ob die Steueranweisung zu verarbeiten ist, demgemäß bestimmt wird, ob eine Zeitlänge, über die das drahtlose Signal kontinuierlich empfangen wird, eine voreingestellte Zeitlänge überschreitet.

2. Verfahren nach Anspruch 1, das ferner Folgendes umfasst:
Erfassen (302d) einer aktuellen Anordnung der Steuervorrichtung in Reaktion auf die erste Bestimmung, dass die erste Stärke des drahtlosen Signals größer ist als die voreingestellte Stärke, wobei die aktuelle Anordnung eine Ausrichtung der Steuervorrichtung umfasst, wobei:
ob die Steueranweisung zu verarbeiten ist, das Bestimmen umfasst, dass die Ausrichtung der Steuervorrichtung innerhalb eines voreingestellten Steuerbereichs liegt.

3. Verfahren nach Anspruch 1, das ferner Folgendes umfasst:
Erfassen (302f) von aktuellen Umgebungsinformationen, wobei:
ob die Steueranweisung zu verarbeiten ist, das Bestimmen umfasst, dass sich eine Umgebung, die von den aktuellen Umgebungsinformationen angezeigt wird, von einer voreingestellten Umgebung unterscheidet.

4. Verfahren nach einem der Ansprüche 1 bis 3, wobei das Durchführen einer Verarbeitung gemäß der Steueranweisung Folgendes umfasst:
Herstellen oder Lösen einer Bindung an die Steuervorrichtung gemäß der Steueranweisung.

5. Verfahren nach einem der Ansprüche 1 bis 3, das ferner Folgendes umfasst:
Erfassen von Attributinformationen der Steuervorrichtung;
Bestimmen einer Stärke gemäß den Attributinformationen als die voreingestellte Stärke;
wobei die Attributinformationen mindestens eines von einer Vorrichtungskennung und einer Sendeleistung umfassen, wobei die Sendeleistung positiv korrelativ zur voreingestellten Stärke ist.

6. Verfahren nach einem der Ansprüche 1 bis 3, wobei das Detektieren der ersten Stärke des drahtlosen Signals von der Steuervorrichtung Folgendes umfasst:
Erfassen einer Empfangssignalstärkeanzeige, RSSI, des drahtlosen Signals von der Steuervorrichtung; und
Erfassen der ersten Stärke des drahtlosen Signals gemäß der RSSI.

7. Verfahren nach einem der Ansprüche 1 bis 3, wobei die erste Stärke des drahtlosen Signals Folgendes umfasst: eine Stärke eines Bluetoothsignals.

8. Einrichtung zum Steuern einer elektronischen Vorrichtung, die Folgendes umfasst:
einen Prozessor; und
einen Speicher zum Speichern von Anweisungen, die vom Prozessor ausführbar sind,
wobei die Einrichtung **dadurch gekennzeichnet ist, dass** der Prozessor dazu ausgelegt ist, die Schritte eines Verfahrens zum Steuern einer elektronischen Vorrichtung nach einem der Ansprüche 1 bis 7 auszuführen.

9. Computerprogramm, das Anweisungen zum Ausführen der Schritte eines Verfahrens zum Steuern einer elektronischen Vorrichtung nach einem der Ansprüche 1 bis 7, wenn das Programm von einem Computer ausgeführt wird, umfasst.

10. Aufzeichnungsmedium, das von einem Computer lesbar ist und auf dem ein Computerprogramm aufgezeichnet ist, das Anweisungen zum Ausführen der Schritte eines Verfahrens zum Steuern einer elektronischen Vorrichtung nach einem der Ansprüche 1 bis 7 beinhaltet.

## Revendications

1. Procédé pour commander un dispositif électronique, réalisé par un dispositif d'exécution, comprenant :
la détection (201) d'une première intensité d'un signal sans fil transmis par un dispositif de commande ;
la réception de deuxièmes intensités du signal sans fil, les deuxièmes intensités étant envoyées par chacun d'autres dispositifs d'exécution recevant le signal sans fil transmis par le dispositif de commande ;
la comparaison de la première intensité et des deuxièmes intensités en réponse à une première détermination selon laquelle la première intensité est supérieure à une intensité prédéfinie ;
l'acquisition (202) d'une instruction de commande dans le signal sans fil en réponse à une deuxième détermination selon laquelle la première intensité est supérieure à chacune des deuxièmes intensités ; et
la réalisation (203) d'un traitement selon l'instruction de commande après que l'instruction de commande a été acquise, dans lequel le fait de traiter ou non l'instruction de commande est déterminé selon qu'une durée pendant laquelle ledit signal sans fil est reçu en continu dépasse ou non une durée prédéfinie.

2. Procédé selon la revendication 1, comprenant en outre :
l'acquisition (302d) d'un agencement actuel du dispositif de commande en réponse à la première détermination selon laquelle la première intensité du signal sans fil est supérieure à l'intensité prédéfinie, l'agencement actuel comprenant une orientation du dispositif de commande, dans lequel :
le fait de traiter ou non l'instruction de commande comprend la détermination selon laquelle l'orientation du dispositif de commande se situe dans une zone de commande prédéfinie.

3. Procédé selon la revendication 1, comprenant en outre :
l'acquisition (302f) d'informations environnementales actuelles, dans lequel :
le fait de traiter ou non l'instruction de commande comprend la détermination selon laquelle un environnement indiqué par les informations environnementales actuelles est différent d'un environnement prédéfini.

4. Procédé selon l'une quelconque des revendications 1 à 3, dans lequel la réalisation du traitement selon l'instruction de commande comprend :
la liaison ou la déliaison avec le dispositif de commande selon l'instruction de commande.

5. Procédé selon l'une quelconque des revendications 1 à 3, comprenant en outre :
l'acquisition d'informations d'attribut du dispositif de commande ;
la détermination d'une intensité correspondant aux informations d'attribut comme intensité prédéfinie ;
dans lequel les informations d'attribut comprennent au moins un parmi un identifiant de dispositif et une puissance de transmission, la puissance de transmission étant en corrélation positive avec l'intensité prédéfinie.

6. Procédé selon l'une quelconque des revendications 1 à 3, dans lequel la détection de la première intensité du signal sans fil provenant du dispositif de commande comprend :
l'acquisition d'une indication d'intensité de signal reçu, RSSI, du signal sans fil provenant du dispositif de commande ; et
l'acquisition de la première intensité du signal sans fil selon la RSSI.

7. Procédé selon l'une quelconque des revendications 1 à 3, dans lequel la première intensité du signal sans fil comprend : une intensité d'un signal Bluetooth.

8. Appareil pour commander un dispositif électronique, comprenant :
un processeur ; et
une mémoire pour stocker des instructions exécutables par le processeur,
l'appareil étant **caractérisé en ce que** le processeur est configuré pour exécuter les étapes d'un procédé pour commander un dispositif électronique selon l'une quelconque des revendications 1 à 7.

9. Programme informatique comportant des instructions pour exécuter les étapes d'un procédé pour commander un dispositif électronique selon l'une quelconque des revendications 1 à 7 lorsque ledit programme est exécuté par un ordinateur.

10. Support d'enregistrement lisible par un ordinateur et sur lequel est enregistré un programme informatique comportant des instructions pour exécuter les étapes d'un procédé pour la commande un dispositif électronique selon l'une quelconque des revendications 1 à 7.
